# EUROPEAN PATENT APPLICATION

(11) **EP 3 553 123 A1**
(43) Date of publication of application: **16.10.2019**
(21) Application number: 17880697.2
(22) Date of filing: 12.12.2017
(51) Int. Cl.: C08L 1/02, C08K 5/05

(54) **FIBROUS CELLULOSE-CONTAINING COMPOSITION**

(30) Priority: 12.12.2016 JP 2016240259
(71) Applicant: Oji Holdings Corporation, Chuo-ku Tokyo 104-0061 (JP)
(72) Inventor: TANAKA Rina, Tokyo 104-0061 (JP); FUSHIMI Hayato, Tokyo 104-0061 (JP); YAMANE Kazuo, Tokyo 104-0061 (JP)
(74) Representative: Godemeyer Blum Lenze Patentanwälte Partnerschaft mbB - werkpatent
(86) International application number: PCT/JP2017/044485
(87) International publication number: WO 2018/110525

(57) **Abstract**

It is an object of the present invention to provide an ultrafine cellulose fiber-containing composition having favorable dispersibility even in the presence of a specific organic solvent. The present invention relates to a cellulose fiber-containing composition comprising cellulose fibers having a fiber width of 1000 nm or less, water, and alcohol, wherein the alcohol is at least one type selected from monovalent primary alcohol, monovalent secondary alcohol, and polyhydric alcohol, and the dielectric constant of the cellulose fiber-containing composition at 25°C is 55 or more and less than 80.

## Description

### Technical Field

The present invention relates to a cellulose fiber-containing composition. Specifically, the present invention relates to a cellulose fiber-containing composition comprising ultrafine cellulose fibers, water, and predetermined alcohol.

### Background Art

In recent years, because of enhanced awareness of alternatives to petroleum resources and environmental consciousness, there has been a focus on materials utilizing reproducible natural fibers. Among natural fibers, cellulose fibers having a fiber diameter of 10 µm or more and 50 µm or less, in particular, wood-derived cellulose fibers (pulp) have been widely used, mainly as paper products, so far.

Ultrafine cellulose fibers, which have a fiber diameter of 1 µm or less, are known as cellulose fibers. Since such ultrafine cellulose fibers can exhibit thickening action, the use of the ultrafine cellulose fibers as a thickener for various intended uses has been considered.

When the ultrafine cellulose fibers are used as a thickener, the ultrafine cellulose fibers are dispersed in a dispersion medium containing an organic solvent in some cases. For example, in the Examples of Patent Document 1, ultrafine cellulose fibers are dispersed in a dispersion medium containing water and a water-soluble organic solvent to produce a dispersion. In addition, in the Examples of Patent Document 2, ultrafine cellulose fibers are dispersed in a dispersion medium containing water and t-butyl alcohol to produce a dispersion, and this dispersion is freeze-dried to form a cellulose porous body. Besides, none of the two documents disclose the control of the dielectric constant of the dispersion.

### Prior Art Documents

### Patent Documents

Patent Document 1: International Publication No. WO 2011/111612
Patent Document 2: Japanese Patent Publication -A-2015-105453

### Summary of Invention

### Object to be Solved by the Invention

As described above, as a dispersion medium for ultrafine cellulose fibers, there is a case where a dispersion medium containing an organic solvent is used. However, as a result of the studies conducted by the present inventors, it has been elucidated that the dispersibility of the ultrafine cellulose fibers tends to be decreased in the presence of a specific organic solvent such as primary or secondary alcohol or polyhydric alcohol.

Hence, in order to solve the aforementioned problem of the prior art technique, the present inventors have conducted studies for the purpose of providing an ultrafine cellulose fiber-containing composition having favorable dispersibility even in the presence of a specific organic solvent such as primary or secondary alcohol or polyhydric alcohol.

### Means for Solving the Object

As a result of intensive studies in order to achieve the aforementioned object, the present inventors have found that a cellulose fiber-containing composition comprising ultrafine cellulose fibers, water and specific alcohol, in which the dispersibility of the ultrafine cellulose fibers is favorable, can be obtained by setting the dielectric constant of the cellulose fiber-containing composition at 25°C within a predetermined range.

Specifically, the present invention has the following configuration.
[1] A cellulose fiber-containing composition comprising cellulose fibers having a fiber width of 1000 nm or less, water, and alcohol, wherein
   the alcohol is at least one type selected from monovalent primary alcohol, monovalent secondary alcohol, and polyhydric alcohol, and
   the dielectric constant of the cellulose fiber-containing composition at 25°C is 55 or more and less than 80.
[2] The cellulose fiber-containing composition according to [1], wherein the content of the alcohol is 10% by mass or more with respect to the total mass of the cellulose fiber-containing composition.
[3] The cellulose fiber-containing composition according to [1] or [2], wherein when the cellulose fiber-containing composition is processed into a slurry having a solid concentration of 0.2% by mass and the slurry is then left at rest under the environment of 25°C for 16 hours or more, the haze of the slurry measured in accordance with JIS K 7136 is 20% or less.
[4] The cellulose fiber-containing composition according to any one of [1] to [3], wherein when the cellulose fiber-containing composition is processed into a slurry having a solid concentration of 0.4% by mass and the slurry is then left at rest under the environment of 25°C for 16 hours or more, the viscosity of the slurry measured by rotating at 25°C at a rotation number of 3 rpm for 3 minutes, using a type B viscometer, is 10000 mPa·s or more.
[5] The cellulose fiber-containing composition according to any one of [1] to [4], wherein when the cellulose fiber-containing composition is processed into a slurry having a solid concentration of 0.2% by mass and the slurry is then left at rest under the environment of 25°C for 16 hours or more, the total light transmittance of the slurry measured in accordance with JIS K 7361 is 98% or more.

### Advantageous Effects of Invention

According to the present invention, a cellulose fiber-containing composition comprising favorably dispersible ultrafine cellulose fibers can be obtained.

### Brief Description of Drawings

Figure 1 is a graph showing the relationship between the amount of NaOH added dropwise to a fiber raw material having a phosphoric acid group and the electrical conductivity.
Figure 2 is a graph showing the relationship between the amount of NaOH added dropwise to a fiber raw material having a carboxyl group and the electrical conductivity.

### Embodiments of Carrying out the Invention

Hereinafter, the present invention will be described in detail. The description for components described below will be based on representative embodiments or specific examples; however, the present invention will not be limited to such embodiments.

### (Cellulose fiber-containing composition)

The present invention relates to a cellulose fiber-containing composition comprising cellulose fibers having a fiber width of 1000 nm or less, water, and alcohol. Herein, alcohol is at least one type selected from monovalent primary alcohol, monovalent secondary alcohol, and polyhydric alcohol. Moreover, the dielectric constant of the cellulose fiber-containing composition at 25°C is 55 or more and less than 80. In the present description, cellulose fibers having a fiber width of 1000 nm or less may also be referred to as ultrafine cellulose fibers, and a cellulose fiber-containing composition comprising such ultrafine cellulose fibers may also be referred to as an ultrafine cellulose fiber-containing composition.

The cellulose fiber-containing composition comprises alcohol. Herein, alcohol is at least one type selected from monovalent primary alcohol, monovalent secondary alcohol, and polyhydric alcohol. The present inventors have found that, among such alcohols, ultrafine cellulose fibers have relatively favorable dispersibility in tertiary alcohol, and the dispersibility of the ultrafine cellulose fibers may be deteriorated in alcohols other than the tertiary alcohol, such as primary alcohol and secondary alcohol, in some cases. In addition, the present inventors have also found that the dispersibility of the ultrafine cellulose fibers is deteriorated also in the presence of polyhydric alcohol in some cases. Thus, the present invention is directed towards enhancing the dispersibility of the ultrafine cellulose fibers even in the presence of at least one type selected from monovalent primary alcohol, monovalent secondary alcohol, and polyhydric alcohol.

In the cellulose fiber-containing composition of the present invention, ultrafine cellulose fibers can exhibit favorable dispersibility, even in a case where at least one type of alcohol selected from monovalent primary alcohol, monovalent secondary alcohol, and polyhydric alcohol is present in a solvent. Herein, the dispersibility of the ultrafine cellulose fibers can be evaluated based on the presence or absence of generation of aggregates or phase separation in the cellulose fiber-containing composition. Moreover, when the dispersibility of the ultrafine cellulose fibers is favorable, the transparency of the cellulose fiber-containing composition is high, and the viscosity of the cellulose fiber-containing composition is also high. Specifically, the dispersibility of the cellulose fiber-containing composition can be evaluated to be favorable, when the transparency and viscosity of the cellulose fiber-containing composition are predetermined values or more.

The dielectric constant of the cellulose fiber-containing composition of the present invention at 25°C may be 55 or more, preferably 56 or more, and more preferably 59 or more. On the other hand, the dielectric constant of the cellulose fiber-containing composition at 25°C may be less than 80, preferably 78 or less, and more preferably 75 or less. In the present invention, even in a case where at least one type of alcohol selected from monovalent primary alcohol, monovalent secondary alcohol, and polyhydric alcohol is present in a solvent, the dispersibility of the ultrafine cellulose fibers can be enhanced by setting the dielectric constant of the cellulose fiber-containing composition at 25°C within the above-described range. In the present invention, even in a case where the cellulose fiber-containing composition comprises specific alcohol, the dielectric constant of the cellulose fiber-containing composition is appropriately controlled, so that the dispersibility of the ultrafine cellulose fibers can be successfully enhanced. Hence, in the present invention, the relationship between the dielectric constant of the cellulose fiber-containing composition and the dispersibility of the ultrafine cellulose fibers has been newly discovered.

The dielectric constant of the cellulose fiber-containing composition can be measured by using a dielectric constant meter. As such a dielectric constant meter, for example, a liquid dielectric constant meter (manufactured by Nihon Rufuto Co., Ltd., Model-871) can be used. Before the measurement of the dielectric constant of the cellulose fiber-containing composition, the cellulose fiber-containing composition is left at rest under the environment of 25°C for 16 hours or more, so that the liquid temperature of the cellulose fiber-containing composition can be 25°C. In addition, the measurement is carried out under the environment of 25°C.

The haze of a slurry, which is measured in accordance with JIS K 7136, after the cellulose fiber-containing composition has been processed into a slurry having a solid concentration of 0.2% by mass and the slurry has been then left at rest under the environment of 25°C for 16 hours or more, is preferably 20% or less, more preferably 15% or less, further preferably 10% or less, and particularly preferably 7% or less. As a haze meter used in the measurement of the haze of the slurry, for example, a haze meter (manufactured by MURAKAMI COLOR RESEARCH LABORATORY Co., Ltd., HM-150) can be used. Upon the measurement of the haze, a slurry having a solid concentration of 0.2% by mass, which has been left at rest under the environment of 25°C for 16 hours or more, is placed in a glass cell for liquid having an optical path length of 1 cm, and the haze thereof is then measured. It is to be noted that the measurement of zero point is carried out with ion exchange water filled in the same glass cell as that described above.

The viscosity of a slurry, which is measured by rotating at 25°C at a rotation number of 3 rpm for 3 minutes, using a type B viscometer, after the cellulose fiber-containing composition has been processed into a slurry having a solid concentration of 0.4% by mass and the slurry has been then left at rest under the environment of 25°C for 16 hours or more, is preferably 10000 mPa·s or more, more preferably 15000 mPa·s or more, and further preferably 20000 mPa·s or more. The upper limit of the viscosity of the slurry is not particularly limited, but it can be set, for example, at 100000 mPa·s. Upon the measurement of the viscosity, a slurry having a solid concentration of 0.4% by mass, which has been left at rest under the environment of 25°C for 16 hours or more, is measured using a type B viscometer. As such a type B viscometer, for example, Type B Viscometer (No. 3 Rotor) (manufactured by BROOKFIELD, analog viscometer T-LVT) can be used.

The total light transmittance of a slurry, which is measured in accordance with JIS K 7361, after the cellulose fiber-containing composition has been processed into a slurry having a solid concentration of 0.2% by mass and the slurry has been then left at rest under the environment of 25°C for 16 hours or more, is preferably 98% or more, more preferably 98.5% or more, and further preferably 99% or more. The total light transmittance of the slurry can be measured using a haze meter, and as such a haze meter, for example, a haze meter (manufactured by MURAKAMI COLOR RESEARCH LABORATORY Co., Ltd., HM-150) can be used. Upon the measurement of the total light transmittance, a slurry having a solid concentration of 0.2% by mass, which has been left at rest under the environment of 25°C for 16 hours or more, is placed in a glass cell for liquid having an optical path length of 1 cm, and the total light transmittance thereof is then measured. It is to be noted that the measurement of zero point is carried out with ion exchange water filled in the same glass cell as that described above.

The form of the cellulose fiber-containing composition is not particularly limited, and it is present in the form of a slurry or a gel. Among others, the cellulose fiber-containing composition is preferably a slurry.

The content of the ultrafine cellulose fibers is preferably 0.01% by mass or more, and more preferably 0.1% by mass or more, with respect to the total mass of the cellulose fiber-containing composition. On the other hand, the content of the ultrafine cellulose fibers is preferably 50% by mass or less, more preferably 30% by mass or less, and further preferably 10% by mass or less, with respect to the total mass of the cellulose fiber-containing composition.

The content of at least one type of alcohol selected from monovalent primary alcohol, monovalent secondary alcohol, and polyhydric alcohol is preferably 10% by mass or more, and more preferably 15% by mass or more, with respect to the total mass of the cellulose fiber-containing composition. On the other hand, the content of at least one type of alcohol selected from monovalent primary alcohol, monovalent secondary alcohol, and polyhydric alcohol is preferably 75% by mass or less, more preferably 60% by mass or less, and further preferably 50% by mass or less, with respect to the total mass of the cellulose fiber-containing composition,. In the present invention, even in a case where 10% by mass or more of at least one type of alcohol selected from monovalent primary alcohol, monovalent secondary alcohol, and polyhydric alcohol is comprised in the cellulose fiber-containing composition, high dispersibility of the ultrafine cellulose fibers can be maintained. Since the dielectric constant of water at 25°C is 80, the content of at least one type of alcohol selected from monovalent primary alcohol, monovalent secondary alcohol, and polyhydric alcohol is appropriately adjusted by the dielectric constant of the added alcohol, so that the dielectric constant of the entire cellulose fiber-containing composition can be adjusted to be 55 or more and less than 80.

The mass ratio (water : alcohol) between the content of water and the content of alcohol in the cellulose fiber-containing composition is fluctuated depending on the dielectric constant of the added alcohol, but it is preferably 9 : 1 to 3 : 7, and more preferably 8 : 2 to 5 : 5. By setting the mass ratio between the content of water and the content of alcohol within the above-described range, the dispersibility of the ultrafine cellulose fibers can be more effectively enhanced.

### (Ultrafine cellulose fibers)

The cellulose fiber raw material for obtaining the ultrafine cellulose fibers that are cellulose fibers having a fiber width of 1000 nm or less is not particularly limited. From the viewpoint of availability and inexpensiveness, pulp is preferably used. Examples of the pulp include wood pulp, non-wood pulp, and deinked pulp. Examples of the wood pulp include chemical pulps such as leaf bleached kraft pulp (LBKP), needle bleached kraft pulp (NBKP), sulfite pulp (SP), dissolving pulp (DP), soda pulp (AP), unbleached kraft pulp (UKP), and oxygen bleached kraft pulp (OKP). Further, included are, but not particularly limited to, semichemical pulps such as semi-chemical pulp (SCP) and chemi-ground wood pulp (CGP); and mechanical pulps such as ground pulp (GP) and thermomechanical pulp (TMP, BCTMP). Examples of the non-wood pulp include, but are not particularly limited to, cotton pulps such as cotton linter and cotton lint; non-wood type pulps such as hemp, wheat straw, and bagasse; and cellulose isolated from ascidian, seaweed, etc., chitin, and chitosan. As a deinked pulp, there is deinked pulp using waste paper as a raw material, but it is not particularly limited thereto. The pulp of the present embodiment may be used singly, or in combination of two or more types. Among the above-listed pulp types, wood pulp and deinked pulp including cellulose are preferable from the viewpoint of easy availability. Among wood pulps, chemical pulp is preferable because it has a higher cellulose content to enhance the yield of the ultrafine cellulose fibers and decomposition of cellulose in the pulp is mild at the time of ultrafine fiber formation (defibration) to yield ultrafine cellulose fibers having a long fiber length with a high aspect ratio. Among them, kraft pulp and sulfite pulp are most preferably selected.

The average fiber width of the ultrafine cellulose fibers is 1000 nm or less according to observation with an electron microscope. The average fiber width is preferably 2 nm or more and 1000 nm or less, more preferably 2 nm or more and 100 nm or less, even more preferably 2 nm or more and 50 nm or less, and further preferably 2 nm or more and 10 nm or less, but is not particularly limited thereto. When the average fiber width of the ultrafine cellulose fibers is less than 2 nm, since they are dissolved in water as cellulose molecules, there appears tendency that the physical properties (strength, rigidity, and dimensional stability) as an ultrafine cellulose fiber are not expressed sufficiently. The ultrafine cellulose fiber is, for example, monofilament cellulose having a fiber width of 1000 nm or less.

The measurement of a fiber width of an ultrafine cellulose fiber by electron microscopic observation is carried out as follows. An aqueous suspension of the ultrafine cellulose fibers having a concentration of 0.05% by mass or more and 0.1% by mass or less is prepared, and the suspension is casted onto a hydrophilized carbon film-coated grid as a sample for TEM observation. If the sample contains wide fibers, SEM images of the surface of the suspension casted onto glass may be observed. The sample is observed using electron microscope images taken at a magnification of 1000x, 5000x, 10000x, or 50000x according to the widths of the constituent fibers. However, the sample, the observation conditions, and the magnification are adjusted so as to satisfy the following conditions:
(1) A single straight line X is drawn in any given portion in an observation image, and 20 or more fibers intersect with the straight line X.
(2) A straight line Y, which intersects perpendicularly with the aforementioned straight line in the same image as described above, is drawn, and 20 or more fibers intersect with the straight line Y.

The widths of the fibers intersecting the straight line X and the straight line Y in the observation image meeting the above-described conditions are visually read. 3 or more sets of images of surface portions, which are at least not overlapped, are thus observed, and the widths of the fibers intersecting the straight line X and the straight line Y are read in the each image. At least 120 fiber widths (20 fibers × 2 × 3 = 120) are thus read. The average fiber width (which is simply referred to as a "fiber width" at times) of the ultrafine cellulose fibers is an average value of the fiber widths thus read.

The fiber length of the ultrafine cellulose fibers is not particularly limited, and it is preferably 0.1 µm or more and 1000 µm or less, more preferably 0.1 µm or more and 800 µm or less, and particularly preferably 0.1 µm or more and 600 µm or less. By setting the fiber length within the above-described range, destruction of the crystalline region of the ultrafine cellulose fibers can be suppressed, and the slurry viscosity of the ultrafine cellulose fibers can also be set within an appropriate range. It is to be noted that the fiber length of the ultrafine cellulose fibers can be obtained by an image analysis using TEM, SEM or AFM.

The ultrafine cellulose fibers preferably have a type I crystal structure. In this regard, the fact that the ultrafine cellulose fibers have a type I crystal structure may be identified by a diffraction profile obtained from a wide angle X-ray diffraction photograph using CuKα (λ = 1.5418 Å) monochromatized with graphite. Specifically, it may be identified based on the fact that there are typical peaks at two positions near 2θ = 14° or more and 17° or less, and near 2θ = 22° or more and 23° or less.

The percentage of the type I crystal structure occupied in the ultrafine cellulose fibers is preferably 30% or more, more preferably 50% or more, and further preferably 70% or more. In this case, more excellent performance can be expected, in terms of heat resistance and the expression of low linear thermal expansion. The crystallinity can be obtained by measuring an X-ray diffraction profile and obtaining it according to a common method (Seagal et al., Textile Research Journal, Vol. 29, p. 786, 1959).

The ultrafine cellulose fibers are preferably fibers having a substituent, and the substituent is preferably an anionic group. The anionic group is preferably at least one selected from, for example, a phosphoric acid group or a phosphoric acid group-derived substituent (which is simply referred to as a "phosphoric acid group" at times), a carboxyl group or a carboxyl group-derived substituent (which is simply referred to as a "carboxyl group" at times), and a sulfone group or a sulfone group-derived substituent (which is simply referred to as a "sulfone group" at times); is more preferably at least one selected from a phosphoric acid group and a carboxyl group; and is particularly preferably a phosphoric acid group. That is to say, the ultrafine cellulose fibers used in the present invention are preferably phosphorylated cellulose.

The ultrafine cellulose fibers preferably have phosphoric acid groups or substituents derived from the phosphoric acid group. The phosphoric acid group is a divalent functional group corresponding to a phosphoric acid from which a hydroxyl group is removed. Specifically, it is a group represented by -PO₃H₂. The substituents derived from the phosphoric acid group include substituents, such as condensation-polymerized phosphoric acid groups, salts of phosphoric acid groups, and phosphoric acid ester groups, and they may be either ionic substituents or nonionic substituents.

In the present invention, the phosphoric acid group or the substituent derived from the phosphoric acid group may be a substituent represented by the following Formula (1):

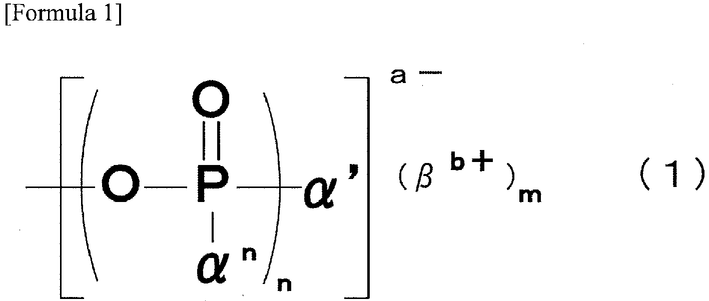

In the Formula (1), a, b, and n each represent a natural number (provided that a = b x m); an "a" number of α¹, α², ..., αⁿ and α' is O⁻, and the rest are either R or OR. All of αⁿ and α' may also be O⁻. R each represents a hydrogen atom, a saturated straight chain hydrocarbon group, a saturated branched chain hydrocarbon group, a saturated cyclic hydrocarbon group, an unsaturated straight chain hydrocarbon group, an unsaturated branched chain hydrocarbon group, an unsaturated cyclic hydrocarbon group, an aromatic group, or a derivative group thereof.

Examples of the saturated straight chain hydrocarbon group include a methyl group, an ethyl group, an n-propyl group, and an n-butyl group, but are not particularly limited thereto. Examples of the saturated branched chain hydrocarbon group include an i-propyl group and a t-butyl group, but are not particularly limited thereto. Examples of the saturated cyclic hydrocarbon group include a cyclopentyl group and a cyclohexyl group, but are not particularly limited thereto. Examples of the unsaturated straight chain hydrocarbon group include a vinyl group and an allyl group, but are not particularly limited thereto. Examples of the unsaturated branched chain hydrocarbon group include an i-propenyl group and a 3-butenyl group, but are not particularly limited thereto. Examples of the unsaturated cyclic hydrocarbon group include a cyclopentenyl group and a cyclohexenyl group, but are not particularly limited thereto. Examples of the aromatic group include a phenyl group and a naphthyl group, but are not particularly limited thereto.

Moreover, examples of the derivative group of the R include functional groups such as a carboxyl group, a hydroxyl group or an amino group, in which at least one type selected from the functional groups is added to or substituted with the main chain or side chain of the above-described various types of hydrocarbon groups, but are not particularly limited thereto. Furthermore, the number of carbon atoms constituting the main chain of the above-described R is not particularly limited, but it is preferably 20 or less, and more preferably 10 or less. By setting the number of carbon atoms constituting the main chain of the R within the above-described range, the molecular weight of phosphoric acid groups can be adjusted in a suitable range, permeation thereof into a fiber raw material can be facilitated, and the yield of the ultrafine cellulose fibers can also be enhanced.

β^{b+} is a mono- or more-valent cation consisting of an organic or inorganic matter. Examples of the mono- or more-valent cation consisting of an organic matter include an aliphatic ammonium and an aromatic ammonium, and examples of the mono- or more-valent cation consisting of an inorganic matter include alkali metal ions such as sodium, potassium or lithium ions, divalent metal cations such as calcium or magnesium ions, and hydrogen ions, but are not particularly limited thereto. These can be applied alone as a single type or in combination of two or more types. As such mono- or more-valent cations consisting of an organic or inorganic matter, sodium or potassium ions, which hardly cause the yellowing of a fiber raw material containing β upon heating and are industrially easily applicable, are preferable, but are not particularly limited thereto.

### < Phosphoric acid group introduction step >

The phosphoric acid group introduction step may be performed by allowing at least one selected from a compound having phosphoric acid groups and salts thereof (hereinafter, referred to as a "phosphorylating reagent" or "Compound A") to react with the fiber raw material including cellulose. Such a phosphorylating reagent may be mixed into the fiber raw material in a dry or wet state, in the form of a powder or an aqueous solution. In another example, a powder or an aqueous solution of the phosphorylating reagent may be added into a slurry of the fiber raw material.

The phosphoric acid group introduction step may be performed by allowing at least one selected from a compound having phosphoric acid groups and salts thereof (a phosphorylating reagent or Compound A) to react with the fiber raw material including cellulose. It is to be noted that this reaction may be performed in the presence of at least one selected from urea and derivatives thereof (hereinafter, referred to as "Compound B").

One example of the method of allowing Compound A to act on the fiber raw material in the presence of Compound B includes a method of mixing the fiber raw material in a dry or wet state with a powder or an aqueous solution of Compound A and Compound B. Another example thereof includes a method of adding a powder or an aqueous solution of Compound A and Compound B to a slurry of the fiber raw material. Among them, a method of adding an aqueous solution of Compound A and Compound B to the fiber raw material in a dry state, or a method of adding a powder or an aqueous solution of Compound A and Compound B to the fiber raw material in a wet state is preferable because of the high homogeneity of the reaction. Compound A and Compound B may be added at the same time or may be added separately. Alternatively, Compound A and Compound B to be subjected to the reaction may be first added as an aqueous solution, which may be then compressed to squeeze out redundant chemicals. The form of the fiber raw material is preferably a cotton-like or thin sheet form, but the form is not particularly limited thereto.

The Compound A used in the present embodiment is at least one selected from a compound having a phosphoric acid group and a salt thereof.

Examples of the compound having a phosphoric acid group include, but are not particularly limited to, phosphoric acid, lithium salts of phosphoric acid, sodium salts of phosphoric acid, potassium salts of phosphoric acid, and ammonium salts of phosphoric acid. Examples of the lithium salts of phosphoric acid include lithium dihydrogen phosphate, dilithium hydrogen phosphate, trilithium phosphate, lithium pyrophosphate, and lithium polyphosphate. Examples of the sodium salts of phosphoric acid include sodium dihydrogen phosphate, disodium hydrogen phosphate, trisodium phosphate, sodium pyrophosphate, and sodium polyphosphate. Examples of the potassium salts of phosphoric acid include potassium dihydrogen phosphate, dipotassium hydrogen phosphate, tripotassium phosphate, potassium pyrophosphate, and potassium polyphosphate. Examples of the ammonium salts of phosphoric acid include ammonium dihydrogen phosphate, diammonium hydrogen phosphate, triammonium phosphate, ammonium pyrophosphate, and ammonium polyphosphate.

Among them, from the viewpoints of high efficiency in introduction of the phosphoric acid group, an improving tendency of the defibration efficiency in a defibration step described below, low cost, and industrial applicability, phosphoric acid, sodium phosphate, potassium phosphate, and ammonium phosphate are preferable. Sodium dihydrogen phosphate, or disodium hydrogen phosphate is more preferable.

Further, since the uniformity of the reaction is improved and the efficiency in introduction of a phosphoric acid group is enhanced, the Compound A is preferably used as an aqueous solution. Although there is no particular restriction on the pH of an aqueous solution of the Compound A, the pH is preferably pH 7 or less because the efficiency in introduction of a phosphoric acid group is high, and more preferably pH 3 or more and pH 7 or less from the viewpoint of suppression of hydrolysis of a pulp fiber. The pH of an aqueous solution of the Compound A may be adjusted, for example, by using, among compounds having a phosphoric acid group, a combination of an acidic one and an alkaline one, and changing the amount ratio thereof. The pH of an aqueous solution of Compound A may also be adjusted by adding an inorganic alkali or an organic alkali to an acidic compound among compounds having a phosphoric acid group.

Although the amount of the Compound A added to a fiber raw material is not particularly limited, if the amount of the Compound A added is converted to a phosphorus atomic weight, the amount of phosphorus atoms added with respect to the fiber raw material (absolute dry mass) is preferably 0.5% by mass or more and 100% by mass or less, more preferably 1% by mass or more and 50% by mass or less, and most preferably 2% by mass or more and 30% by mass or less. When the amount of phosphorus atoms added to the fiber raw material is within the above-described range, the yield of the ultrafine cellulose fibers can be further improved. If the amount of phosphorus atoms added to the fiber raw material exceeds 100% by mass, the effect of improving the yield has reached the ceiling and the cost of the used Compound A increases. On the other hand, by setting the amount of phosphorus atoms added to the fiber raw material to be the above-described lower limit or more, the yield can be enhanced.

Examples of the Compound B used in the present embodiment include urea, biuret, 1-phenyl urea, 1-benzyl urea, 1-methyl urea, and 1-ethyl urea.

The Compound B is preferably used as an aqueous solution, as with the Compound A. Further, an aqueous solution in which both the Compound A and Compound B are dissolved is preferably used, because the uniformity of a reaction may be enhanced. The amount of the Compound B added to a fiber raw material (absolute dry mass) is preferably 1% by mass or more and 500% by mass or less, more preferably 10% by mass or more and 400% by mass or less, further preferably 100% by mass or more and 350% by mass or less, and particularly preferably 150% by mass or more and 300% by mass or less.

The reaction system may comprise an amide or an amine, in addition to the Compound A and the Compound B. Examples of the amide include formamide, dimethylformamide, acetamide, and dimethylacetamide. Examples of the amine include methylamine, ethylamine, trimethylamine, triethylamine, monoethanolamine, diethanolamine, triethanolamine, pyridine, ethylenediamine, and hexamethylenediamine. Among them, particularly, triethylamine is known to work as a favorable reaction catalyst.

In the phosphoric acid group introduction step, it is preferable to perform a heat treatment. For the temperature of such a heat treatment, it is preferable to select a temperature that allows an efficient introduction of phosphoric acid groups, while suppressing the thermal decomposition or hydrolysis reaction of fibers. Specifically, the temperature is preferably 50°C or higher and 300°C or lower, more preferably 100°C or higher and 250°C or lower, and further preferably 150°C or higher and 200°C or lower. In addition, a vacuum dryer, an infrared heating device, or a microwave heating device may be used for heating.

Upon the heat treatment, if the time for leaving the fiber raw material to stand still gets longer while the fiber raw material slurry to which the Compound A is added contains water, as drying advances, water molecules and the Compound A dissolved therein move to the surface of the fiber raw material. As such, there is a possibility of the occurrence of unevenness in the concentration of the Compound A in the fiber raw material, and the introduction of phosphoric acid groups to the fiber surface may not progress uniformly. In order to suppress the occurrence of unevenness in the concentration of the Compound A in the fiber raw material due to drying, the fiber raw material in the shape of a very thin sheet may be used, or a method of heat-drying or vacuum-drying the fiber raw material, while kneading or stirring with the Compound A using a kneader or the like, may be employed.

As a heating device used for heat treatment, a device capable of always discharging moisture retained by slurry or moisture generated by an addition reaction of phosphoric acid groups with hydroxy groups of the fiber to the outside of the device system is preferable, and for example, forced convection ovens or the like are preferable. By always discharging moisture in the device system, in addition to being able to suppress a hydrolysis reaction of phosphoric acid ester bonds, which is a reverse reaction of the phosphoric acid esterification, acid hydrolysis of sugar chains in the fiber may be suppressed as well, and ultrafine fibers with a high axial ratio can be obtained.

The time for heat treatment is, although affected by the heating temperature, preferably 1 second or more and 300 minutes or less, more preferably 1 second or more and 1000 seconds or less, and further preferably 10 seconds or more and 800 seconds or less, after moisture is substantially removed from the fiber raw material slurry. In the present invention, by setting the heating temperature and heating time within an appropriate range, the amount of phosphoric acid groups introduced can be set within a preferred range.

The amount of phosphoric acid groups introduced is, per 1 g (mass) of the ultrafine cellulose fibers, preferably 0.10 mmol/g or more, more preferably 0.20 mmol/g or more, further preferably 0.50 mmol/g or more, and particularly preferably 1.00 mmol/g or more. On the other hand, the amount of phosphoric acid groups introduced is, per 1 g (mass) of the ultrafine cellulose fibers, preferably 3.65 mmol/g or less, more preferably 3.50 mmol/g or less, and further preferably 3.00 mmol/g or less. By setting the amount of phosphoric acid groups introduced within the above-described range, it may become easy to perform fibrillation on the fiber raw material, and the stability of the ultrafine cellulose fibers can be enhanced. In addition, by setting the amount of phosphoric acid groups introduced within the above-described range, the viscosity of a slurry of the ultrafine cellulose fibers can be adjusted within a suitable range, and thereby, a sheet having a desired thickness can be easily formed. Besides, in the present description, the content of phosphoric acid groups in the ultrafine cellulose fibers is equal to the amount of strongly acidic groups of phosphoric acid groups in the ultrafine cellulose fibers, as described later.

The amount of phosphoric acid groups introduced into a fiber raw material may be measured by a conductometric titration method. Specifically, the amount introduced may be measured by performing fibrillation on ultrafine fibers in a defibration treatment step, treating the resulting slurry comprising ultrafine cellulose fibers with an ion exchange resin, and then examining a change in the electrical conductivity while adding an aqueous sodium hydroxide solution.

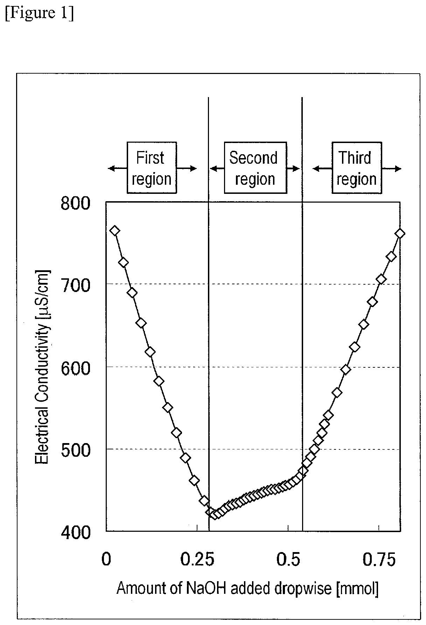

The conductometric titration confers a curve shown in Figure 1 as an alkali is added. First, the electrical conductivity is rapidly reduced (hereinafter, this region is referred to as a "first region"). Then, the conductivity starts rising slightly (hereinafter, this region is referred to as a "second region"). Then, the increment of the conductivity is increased (hereinafter, this region is referred to as a "third region"). In short, three regions appear. The boundary point between the second region and the third region is defined as a point at which a change amount in the two differential values of conductivity, namely, an increase in the conductivity (inclination) becomes maximum. Among them, the amount of the alkali required for the first region among these regions is equal to the amount of a strongly acidic group in the slurry used in the titration, and the amount of the alkali required for the second region is equal to the amount of a weakly acidic group in the slurry used in the titration. When condensation of a phosphoric acid group occurs, the weakly acidic group is apparently lost, so that the amount of the alkali required for the second region is decreased as compared with the amount of the alkali required for the first region. On the other hand, the amount of the strongly acidic group agrees with the amount of the phosphorus atom regardless of the presence or absence of condensation. Therefore, the simple term "the amount of the phosphoric acid group introduced (or the amount of the phosphoric acid group)" or "the amount of the substituent introduced (or the amount of the substituent)" refers to the amount of the strongly acidic group. That is to say, the amount (mmol) of the alkali required for the first region in the curve shown in Figure 1 is divided by the solid content (g) in the slurry as a titration target to obtain the amount (mmol/g) of the substituent introduced.

The phosphoric acid group introduction step may be performed at least once, but may be repeated multiple times as well. For example, the phosphoric acid introduction step is preferably carried out twice. This case is preferable, since more phosphoric acid groups are introduced.

### < Carboxyl group introduction step >

When the ultrafine cellulose fibers have carboxyl groups, such carboxyl groups can be introduced into the ultrafine cellulose fibers by performing a carboxyl group introduction step. In the carboxyl group introduction step, the fiber raw material is treated by an oxidation treatment such as a TEMPO oxidation treatment, or is treated with a compound having groups derived from carboxylic acid, a derivative thereof, or an acid anhydride thereof or a derivative thereof, so that carboxyl groups can be introduced into the ultrafine cellulose fibers.

Examples of the compound having a carboxyl group include, but are not particularly limited to, dicarboxylic acid compounds such as maleic acid, succinic acid, phthalic acid, fumaric acid, glutaric acid, adipic acid or itaconic acid, and tricarboxylic acid compounds such as citric acid or aconitic acid.

Examples of the acid anhydride of the compound having a carboxyl group include, but are not particularly limited to, acid anhydrides of dicarboxylic acid compounds, such as maleic anhydride, succinic anhydride, phthalic anhydride, glutaric anhydride, adipic anhydride, or itaconic anhydride.

Examples of the derivative of the compound having a carboxyl group include, but are not particularly limited to, an imidized product of the acid anhydride of the compound having a carboxyl group and a derivative of the acid anhydride of the compound having a carboxyl group. Examples of the imidized product of the acid anhydride of the compound having a carboxyl group include, but are not particularly limited to, imidized products of dicarboxylic acid compounds, such as maleimide, succinimide or phthalimide.

The derivative of the acid anhydride of the compound having a carboxyl group is not particularly limited. Examples include acid anhydrides of the compounds having a carboxyl group, in which at least some hydrogen atoms are substituted with substituents (for example, an alkyl group, a phenyl group, etc.), such as dimethylmaleic anhydride, diethylmaleic anhydride, or diphenylmaleic anhydride.

In the case of performing a TEMPO oxidation treatment in the carboxyl group introduction step, the treatment is preferably carried out under conditions of pH 6 or more and pH 8 or less. Such a treatment is also referred to as a neutral TEMPO oxidation treatment. The neutral TEMPO oxidation treatment can be carried out, for example, by adding pulp, nitroxy radical used as a catalyst, such as TEMPO (2,2,6,6-tetramethylpiperidin-1-oxyl), and sodium hypochlorite used as a sacrifice reagent to a sodium phosphate buffer (pH = 6.8). Moreover, by allowing sodium chlorite to coexist in the reaction system, aldehyde generated in the oxidation process can be efficiently oxidized to a carboxyl group.

The amount of carboxyl groups introduced is, per 1 g (mass) of the ultrafine cellulose fibers, preferably 0.10 mmol/g or more, more preferably 0.20 mmol/g or more, further preferably 0.50 mmol/g or more, and particularly preferably 1.00 mmol/g or more.

On the other hand, the amount of carboxyl groups introduced is, per 1 g (mass) of the ultrafine cellulose fibers, preferably 3.65 mmol/g or less, more preferably 3.50 mmol/g or less, and further preferably 3.00 mmol/g or less.

The amount of carboxyl groups introduced can be measured by a conductometric titration method. Upon the measurement by the conductometric titration method, while adding a sodium hydroxide aqueous solution to the obtained ultrafine cellulose fiber slurry, a change in the conductivity is obtained, so that the amount of carboxyl groups introduced is measured.

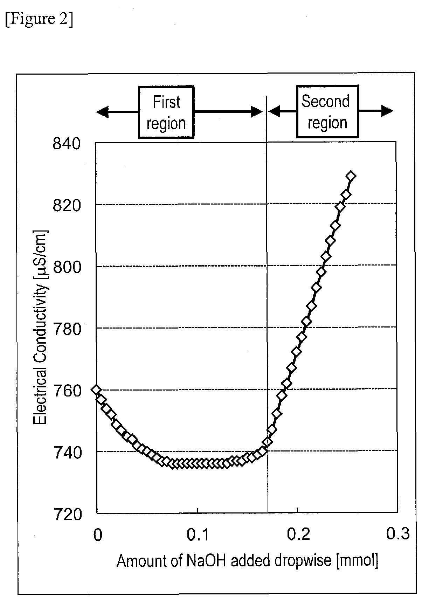

In conductometric titration, addition of alkali gives the curve shown in Figure 2. In this curve, the region until an increment (inclination) in the electric conductivity becomes almost constant after the electric conductivity has been reduced is defined as a first region, and the subsequent region until an increment (inclination) in the conductivity is increased is defined as a second region. It is to be noted that the boundary point between the first region and the second region is defined as a point at which the second-order differential value of the conductivity, namely, the amount of change in the increment (inclination) in the conductivity, becomes maximum. The amount (mmol) of the alkali required for the first region in the curve shown in Figure 2 is divided by the solid content (g) in the ultrafine cellulose fiber-containing slurry as a titration target to obtain the amount (mmol/g) of substituents introduced.

### < Alkali treatment >

When ultrafine cellulose fibers are produced, an alkali treatment may be conducted between an ionic substituent introduction step, such as a phosphoric acid group introduction step or a carboxyl group introduction step, and a defibration treatment step as described below. The method of the alkali treatment is not particularly limited. For example, a method of immersing ionic substituent-introduced fibers in an alkaline solution may be applied.

The alkali compound contained in the alkaline solution is not particularly limited, but it may be an inorganic alkaline compound or an organic alkali compound. The solvent of the alkaline solution may be either water or an organic solvent. The solvent is preferably a polar solvent (water, or a polar organic solvent such as alcohol), and more preferably an aqueous solvent containing at least water.

Among alkaline solutions, a sodium hydroxide aqueous solution, or a potassium hydroxide aqueous solution is particularly preferable, because of high versatility.

The temperature of the alkali solution in the alkali treatment step is not particularly limited, but it is preferably 5°C or higher and 80°C or lower, and more preferably 10°C or higher and 60°C or lower.

The immersion time in the alkali solution in the alkali treatment step is not particularly limited, but it is preferably 5 minutes or more and 30 minutes or less, and more preferably 10 minutes or more and 20 minutes or less.

The amount of the alkali solution used in the alkali treatment is not particularly limited, but it is preferably 100% by mass or more and 100000% by mass or less, and more preferably 1000% by mass and 10000% by mass or less, with respect to the absolute dry mass of the ionic substituent-introduced fibers.

In order to reduce the consumption of an alkaline solution in the alkali treatment step, ionic substituent-introduced fibers may be washed with water or an organic solvent before the alkali treatment step. After the alkali treatment, the alkali-treated ionic substituent-introduced fibers are preferably washed with water or an organic solvent before the defibration treatment step in order to improve the handling property.

### < Defibration treatment >

The ionic substituent-introduced fibers are subjected to a defibration treatment in a defibration treatment step. In the defibration treatment step, fibers are defibrated usually using a defibration treatment apparatus to yield a slurry comprising ultrafine cellulose fibers, and there is no particular restriction on a treatment apparatus, or a treatment method.

A high-speed defibrator, a grinder (stone mill-type crusher), a high-pressure homogenizer, an ultrahigh-pressure homogenizer, a high-pressure collision-type crusher, a ball mill, a bead mill, or the like can be used as the defibration treatment apparatus. Alternatively, for example, a wet milling apparatus such as a disc-type refiner, a conical refiner, a twin-screw kneader, an oscillation mill, a homomixer under high-speed rotation, an ultrasonic disperser, or a beater may also be used as the defibration treatment apparatus. The defibration treatment apparatus is not limited to the above. Examples of a preferred defibration treatment method include a high-speed defibrator, a high-pressure homogenizer, and an ultrahigh-pressure homogenizer, which are less affected by milling media, and are free from apprehension of contamination.

Upon the defibration treatment, the fiber raw material is preferably diluted with water and an organic solvent each alone or in combination, to prepare a slurry, though the method is not particularly limited thereto. Water as well as a polar organic solvent can be used as a dispersion medium. Preferred examples of the polar organic solvent include, but are not particularly limited to, alcohols, ketones, ethers, dimethyl sulfoxide (DMSO), dimethylformamide (DMF), and dimethylacetamide (DMAc). Examples of the alcohols include methanol, ethanol, n-propanol, isopropanol, n-butanol, and t-butyl alcohol. Examples of the ketones include acetone and methyl ethyl ketone (MEK). Examples of the ethers include diethyl ether and tetrahydrofuran (THF). One of these dispersion media may be used, or two or more thereof may be used. The dispersion medium may also contain a solid content other than the fiber raw material, for example, hydrogen-binding urea.

In the present invention, after the ultrafine cellulose fibers have been concentrated and dried, a defibration treatment may be carried out thereon. In this case, there is no particular restriction on the method of concentration and drying, but examples thereof include a method in which a concentrating agent is added into a slurry comprising the ultrafine cellulose fibers, and a method using a dehydrator, a press, a dryer, and the like used generally. Further, publicly known methods, for example as described in WO 2014/024876, WO 2012/107642, and WO 2013/121086, may be used. Moreover, a sheet may be formed from the concentrated ultrafine cellulose fibers. The formed sheet may be pulverized and may be subjected to a defibration treatment.

Examples of a device used for pulverizing the ultrafine cellulose fibers include, but are not particularly limited to, a high-speed defibrator, a grinder (stone mill-type grinder), a high-pressure homogenizer, an ultra-high pressure homogenizer, a high-pressure collision type crusher, a ball mill, a bead mill, a disk type refiner, a conical refiner, a twin screw kneader, a vibrating mill, and a device for wet milling, such as a high-speed rotating homomixer, an ultrasonic disperser, or a beater.

### (Alcohol)

The cellulose fiber-containing composition comprises at least one type of alcohol selected from monovalent primary alcohol, monovalent secondary alcohol, and polyhydric alcohol. The alcohol may be used alone as a single type, or may also be used in combination of two or more types of alcohols.

Examples of the monovalent primary alcohol include: aliphatic alcohols such as methanol, ethanol, 1-propanol, 1-butanol, or 1 pentanol; and aromatic alcohols such as benzyl alcohol. Among others, methanol and ethanol are preferably used.

Examples of the monovalent secondary alcohol include 2-propanol (isopropyl alcohol), 2-butanol, 2-pentanol, and cyclohexanol. Among others, 2-propanol (isopropyl alcohol) is preferably used.

Examples of the polyhydric alcohol include divalent or higher alcohol. Among others, the polyhydric alcohol is preferably divalent or trivalent alcohol. Examples of the polyhydric alcohol include methylene glycol, ethylene glycol, propylene glycol, glycerin, and pentaerythritol. Among others, ethylene glycol, propylene glycol, and glycerin are preferably used.

The number of carbon atoms contained in at least one type of alcohol selected from monovalent primary alcohol, monovalent secondary alcohol, and polyhydric alcohol is preferably 10 or less, more preferably 8 or less, and further preferably 6 or less.

The dielectric constant of at least one type of alcohol selected from monovalent primary alcohol, monovalent secondary alcohol, and polyhydric alcohol is preferably 60 or less, and more preferably 50 or less. The lower limit of the dielectric constant of alcohol is not particularly limited, and it can be set at, for example, 1.

### (Optional components)

The cellulose fiber-containing composition of the present invention may further comprise a hydrophilic polymer or an organic ion. Examples of the hydrophilic polymer include polyethylene glycol, cellulose derivatives (hydroxyethyl cellulose, carboxyethyl cellulose, carboxymethyl cellulose, etc.), casein, dextrin, starch, modified starch, polyvinyl alcohol, modified polyvinyl alcohol (acetoacetylated polyvinyl alcohol, etc.), polyethylene oxide, polyvinylpyrrolidone, polyvinyl methyl ether, polyacrylates, polyacrylamide, acrylic acid alkyl ester copolymers, and urethane copolymers. Among others, the hydrophilic polymer is preferably at least one type selected from polyethylene glycol (PEG), polyvinyl alcohol (PVA), modified polyvinyl alcohol (modified PVA) and polyethylene oxide (PEO), and is more preferably polyethylene oxide (PEO).

Examples of the organic ion include tetraalkylammonium ions and tetraalkylphosphonium ions. Examples of the tetraalkylammonium ions include a tetramethylammonium ion, a tetraethylammonium ion, a tetrapropylammonium ion, a tetrabutylammonium ion, a tetrapentylammonium ion, a tetrahexylammonium ion, a tetraheptylammonium ion, a tributylmethylammonium ion, a lauryltrimethylammonium ion, a cetyltrimethylammonium ion, a stearyltrimethylammonium ion, an octyldimethylethylammonium ion, a lauryldimethylethylammonium ion, a didecyldimethylammonium ion, a lauryldimethylbenzylammonium ion, and a tributylbenzylammonium ion. Examples of the tetraalkylphosphonium ions include a tetramethylphosphonium ion, a tetraethylphosphonium ion, a tetrapropylphosphonium ion, a tetrabutylphosphonium ion, and a lauryltrimethylphosphonium ion. In addition, tetrapropylonium ions and tetrabutylonium ions may include tetra-n-propylonium ions and tetra-n-butylonium ions, respectively.

Moreover, the cellulose fiber-containing composition may further comprise optional components such as a filler, a pigment, a dye, an ultraviolet absorber, a perfume, an antiseptic, a surfactant, and an antioxidant.

The cellulose fiber-containing composition may further comprise a thermoplastic resin. Examples of the thermoplastic resin include a styrene resin, an acrylic resin, an aromatic polycarbonate resin, an aliphatic polycarbonate resin, an aromatic polyester resin, an aliphatic polyester resin, an aliphatic polyolefin resin, a cyclic olefin resin, a polyamide resin, a polyphenylene ether resin, a thermoplastic polyimide resin, a polyacetal resin, a polysulfone resin, and an amorphous fluorine resin, but are not limited thereto. Among others, the thermoplastic resin is preferably an aromatic polyester resin, an aliphatic polyester resin, an aliphatic polyolefin resin, an aromatic polycarbonate resin, or an aliphatic polycarbonate resin. More specifically, the thermoplastic resin is preferably at least one type selected from, for example, polylactic acid, polybutylene succinate, an ethylene-vinyl alcohol copolymer, amorphous PET, polypropylene, acid-modified polypropylene, polycarbonate and polyethylene; and is more preferably at least one type selected from polypropylene and acid-modified polypropylene.

The thermoplastic resin may be a thermoplastic resin emulsion, but it is preferably an emulsion. When the thermoplastic resin is a thermoplastic resin fiber, the fiber length (number average fiber length) of the thermoplastic resin fiber is preferably 0.5 mm or more, more preferably 1 mm or more, and further preferably 3 mm or more. On the other hand, the fiber length (number average fiber length) of the thermoplastic resin fiber is preferably 100 mm or less, more preferably 50 mm or less, and further preferably 25 mm or less.

Moreover, the fiber diameter (number average fiber diameter) of the thermoplastic resin fiber is preferably 0.5 µm or more, more preferably 1 µm or more, and further preferably 3 µm or more. On the other hand, the fiber diameter (number average fiber diameter) of the thermoplastic resin fiber is preferably 50 µm or less, more preferably 25 µm or less, and further preferably 15 µm or less.

When the cellulose fiber-containing composition comprises a thermoplastic resin, the content of the thermoplastic resin is preferably 50 parts by mass or less, and more preferably 30 parts by mass or less, with respect to 100 parts by mass of the cellulose fibers.

### (Method for producing cellulose fiber-containing composition)

The cellulose fiber-containing composition of the present invention can be obtained by mixing cellulose fibers having a fiber width of 1000 nm or less, water, at least one type of alcohol selected from monovalent primary alcohol, monovalent secondary alcohol, and polyhydric alcohol, and as necessary, other components. The mixing method is not particularly limited, but the aforementioned components can be mixed using, for example, various types of kneading machines such as a vacuum homomixer, a disperser, a propeller mixer or a kneader, a blender, a homogenizer, an ultrasonic homogenizer, a colloidal mill, a pebble mill, a bead mill pulverizer, a high-pressure homogenizer, etc.

Upon the mixing of individual components of the cellulose fiber-containing composition, water, and at least one type of alcohol selected from monovalent primary alcohol, monovalent secondary alcohol, and polyhydric alcohol may be further mixed with the ultrafine cellulose fiber-containing slurry that has been subjected to a defibration treatment. Also, cellulose fibers may be subjected to a defibration treatment in a mixed solvent of water and at least one type of alcohol selected from monovalent primary alcohol, monovalent secondary alcohol, and polyhydric alcohol.

### (Intended use)

The cellulose fiber-containing composition of the present invention can be used, for example, as a thickener, in various types of intended uses. In addition, the present cellulose fiber-containing composition may be mixed with a resin or an emulsion and may be used as a reinforcing material. Otherwise, the cellulose fiber-containing composition may be used to form a film, so as to produce various types of sheets. Further, the present cellulose fiber-containing composition may also be used as threads, filters, woven fabrics, buffering materials, sponges, and polishing materials.

The cellulose fiber-containing composition of the present invention is characterized in that ultrafine cellulose fibers are uniformly dispersed, and in that the cellulose fiber-containing composition has high transparency. Hence, the cellulose fiber-containing composition can be used to produce a highly transparent sheet. Such a sheet is suitable for intended uses, such as light transmissive substrates for various display devices, various solar cells, and the like. Also, the cellulose fiber-containing composition is suitable for intended uses, such as substrates of electronic devices, components of consumer electronics, window materials of various types of vehicles or buildings, interior materials, exterior materials, and wrapping materials.

Upon formation of a sheet from the cellulose fiber-containing composition, it is preferable to establish a step of applying a slurry-state cellulose fiber-containing composition onto a base material. Moreover, such a slurry-state cellulose fiber-containing composition may be subjected to papermaking to form a sheet.

### Examples

Hereinafter, the features of the present invention will be described more specifically with reference to Examples and Comparative Examples. The materials, used amounts, proportions, treatment content, treatment procedures, and the like shown in the following Examples can be appropriately changed to the extent that such changes do not depart from the spirit of the present invention. Therefore, the scope of the present invention should not be construed as being limited by the following specific examples.

### [Example 1]

### < Production of phosphoric acid group-introduced cellulose fibers >

Pulp manufactured by Oji Paper Co., Ltd. (solid content: 93% by mass, basis weight: 208 g/m², sheet-shaped, Canadian Standard Freeness (CSF) measured according to JIS P 8121 after defibration: 700 ml) was used as needle bleached kraft pulp. 100 Parts by mass (absolute dry mass) of the needle bleached kraft pulp were impregnated with a mixed aqueous solution of ammonium dihydrogen phosphate and urea, and were then compressed to result in 49 parts by mass of the ammonium dihydrogen phosphate and 130 parts by mass of the urea, so as to obtain chemical-impregnated pulp. The obtained chemical-impregnated pulp was dried in a dryer of 105°C for moisture evaporation to pre-dry the chemical-impregnated pulp. Then, the chemical-impregnated pulp was heated in an air-blow dryer set at 140°C for 10 minutes, so that a phosphoric acid group was introduced into cellulose in the pulp to obtain phosphorylated pulp. 10000 Parts by mass of ion exchange water were poured onto 100 parts by mass (absolute dry mass) of the obtained phosphorylated pulp, which was then uniformly dispersed by stirring, followed by filtration and dehydration to obtain a dehydrated sheet. This step was repeated twice to obtain phosphoric acid modified cellulose fibers. Subsequently, 5000 ml of ion exchange water was added to the cellulose into which the phosphoric acid group had been introduced, and the resultant mixture was stirred and washed, and then dehydration was carried out. The dehydrated pulp was diluted with 5000 ml of ion exchange water, and a 1 N aqueous solution of sodium hydroxide was gradually added, while stirring, until the pH became 12 or more and 13 or less, so as to obtain a pulp dispersion. Then, this pulp dispersion was dehydrated and washed with 5000 ml of ion exchange water. This dehydration and washing operation was repeated one more time.

### < Mechanical treatment >

Ion exchange water was added to the phosphoric acid-modified cellulose fibers obtained after the washing and dehydration to produce a pulp suspension having a solid concentration of 1.0% by mass. This pulp suspension was treated using a wet atomization apparatus (manufactured by Sugino Machine Limited; Ultimizer) at a pressure of 245 MPa five times to obtain an ultrafine cellulose fiber-containing slurry.

### < Measurement of amount of substituent >

The amount of the substituent introduced is the amount of a phosphoric acid group introduced into a fiber raw material. The greater this value, the more the phosphoric acid groups that are introduced therein. The amount of the substituent introduced was measured by diluting the target ultrafine cellulose fibers with ion exchange water to have a content of 0.2% by mass, followed by a treatment with an ion exchange resin or titration using an alkali. In the treatment with an ion exchange resin, a strongly acidic ion exchange resin (Amberjet 1024; Organo Corp.; conditioning agent) was added at a volume ratio of 1/10 to the slurry containing 0.2% by mass of the ultrafine cellulose fibers, followed by a stirring treatment for 1 hour. Then, the suspension was poured onto a mesh having an opening of 90 µm, so that the slurry was separated from the resin. In the titration using an alkali, a 0.1 N sodium hydroxide aqueous solution was added to the slurry containing the ultrafine cellulose fibers after the ion exchange, which change in the value of electrical conductivity exhibited by the slurry was measured. Specifically, the amount of the alkali (mmol) required for the first region in the curve shown in Figure 1 (phosphoric acid group) was divided by the solid content (g) in the slurry to be titrated to determine the amount of the substituent introduced (mmol/g). As a result of the calculation, the amount of the substituent introduced was found to be 1.29 mmol/g.

### < Measurement of fiber width >

The fiber width of the ultrafine cellulose fibers was measured by the following method.

A supernatant of the ultrafine cellulose fiber-containing slurry was diluted with water to a concentration of 0.01% by mass or more and 0.1% by mass or less, and the obtained solution was then added dropwise onto a hydrophilized carbon grid film. After drying, it was stained with uranyl acetate, and was then observed under a transmission electron microscope (manufactured by JEOL; JEOL-2000EX). The fiber width of the obtained phosphoric acid-modified cellulose fibers was approximately 4 to 20 nm.

### < Preparation of composition >

Water and isopropyl alcohol were added to the above-described ultrafine cellulose fiber-containing slurry (solid concentration: 2.0% by mass), such that 80 parts by mass of water and 19.6 parts by mass of isopropyl alcohol were added with respect to 0.4 parts by mass of the ultrafine cellulose fibers. That is to say, the concentration was adjusted, so that the solid concentration became 0.4% by mass. Thus, an ultrafine cellulose fiber-containing composition was obtained.

### [Example 2]

An ultrafine cellulose fiber-containing composition was obtained in the same manner as that of Example 1, with the exception that the additive amount of water was 70 parts by mass and the additive amount of isopropyl alcohol was 29.6 parts by mass, with respect to 0.4 parts by mass of the ultrafine cellulose fibers.

### [Example 3]

An ultrafine cellulose fiber-containing composition was obtained in the same manner as that of Example 1, with the exception that the additive amount of water was 80 parts by mass and the additive amount of ethanol was 19.6 parts by mass, with respect to 0.4 parts by mass of the ultrafine cellulose fibers.

### [Example 4]

An ultrafine cellulose fiber-containing composition was obtained in the same manner as that of Example 1, with the exception that the additive amount of water was 70 parts by mass and the additive amount of ethanol was 29.6 parts by mass, with respect to 0.4 parts by mass of the ultrafine cellulose fibers.

### [Example 5]

An ultrafine cellulose fiber-containing composition was obtained in the same manner as that of Example 1, with the exception that the additive amount of water was 80 parts by mass and the additive amount of propylene glycol was 19.6 parts by mass, with respect to 0.4 parts by mass of the ultrafine cellulose fibers.

### [Example 6]

An ultrafine cellulose fiber-containing composition was obtained in the same manner as that of Example 1, with the exception that the additive amount of water was 70 parts by mass and the additive amount of propylene glycol was 29.6 parts by mass, with respect to 0.4%parts by mass of the ultrafine cellulose fibers.

### [Example 7]

An ultrafine cellulose fiber-containing composition was obtained in the same manner as that of Example 1, with the exception that the additive amount of water was 80 parts by mass and the additive amount of methanol was 19.6 parts by mass, with respect to 0.4 parts by mass of the ultrafine cellulose fibers.

### [Example 8]

An ultrafine cellulose fiber-containing composition was obtained in the same manner as that of Example 1, with the exception that the additive amount of water was 80 parts by mass and the additive amount of ethylene glycol was 19.6 parts by mass, with respect to 0.4 parts by mass of the ultrafine cellulose fibers.

### [Example 9]

An ultrafine cellulose fiber-containing composition was obtained in the same manner as that of Example 1, with the exception that the additive amount of water was 49.8 parts by mass and the additive amount of ethylene glycol was 49.8 parts by mass, with respect to 0.4 parts by mass of the ultrafine cellulose fibers.

### [Example 10]

An ultrafine cellulose fiber-containing composition was obtained in the same manner as that of Example 1, with the exception that the additive amount of water was 80 parts by mass and the additive amount of glycerin was 19.6 parts by mass, with respect to 0.4 parts by mass of the ultrafine cellulose fibers.

### [Example 11]

An ultrafine cellulose fiber-containing composition was obtained in the same manner as that of Example 1, with the exception that the additive amount of water was 49.8 parts by mass and the additive amount of glycerin was 49.8 parts by mass, with respect to 0.4 parts by mass of the ultrafine cellulose fibers.

### [Comparative Example 1]

An ultrafine cellulose fiber-containing composition was obtained in the same manner as that of Example 1, with the exception that the additive amount of water was 60 parts by mass and the additive amount of isopropyl alcohol was 39.6 parts by mass, with respect to 0.4 parts by mass of the ultrafine cellulose fibers.

### [Comparative Example 2]

An ultrafine cellulose fiber-containing composition was obtained in the same manner as that of Example 1, with the exception that the additive amount of water was 49.8 parts by mass and the additive amount of isopropyl alcohol was 49.8 parts by mass, with respect to 0.4 parts by mass of the ultrafine cellulose fibers.

### [Comparative Example 3]

An ultrafine cellulose fiber-containing composition was obtained in the same manner as that of Example 1, with the exception that the additive amount of water was 19.6 parts by mass and the additive amount of isopropyl alcohol was 80 parts by mass, with respect to 0.4 parts by mass of the ultrafine cellulose fibers.

### [Comparative Example 4]

An ultrafine cellulose fiber-containing composition was obtained in the same manner as that of Example 1, with the exception that the additive amount of water was 60 parts by mass and the additive amount of ethanol was 39.6 parts by mass, with respect to 0.4 parts by mass of the ultrafine cellulose fibers.

### [Comparative Example 5]

An ultrafine cellulose fiber-containing composition was obtained in the same manner as that of Example 1, with the exception that the additive amount of water was 49.8 parts by mass and the additive amount of ethanol was 49.8 parts by mass, with respect to 0.4 parts by mass of the ultrafine cellulose fibers.

### [Comparative Example 6]

An ultrafine cellulose fiber-containing composition was obtained in the same manner as that of Example 1, with the exception that the additive amount of water was 19.6 parts by mass and the additive amount of ethanol was 80 parts by mass, with respect to 0.4 parts by mass of the ultrafine cellulose fibers.

### [Comparative Example 7]

An ultrafine cellulose fiber-containing composition was obtained in the same manner as that of Example 1, with the exception that the additive amount of water was 19.6 parts by mass and the additive amount of propylene glycol was 80 parts by mass, with respect to 0.4 parts by mass of the ultrafine cellulose fibers.

### [Comparative Example 8]

An ultrafine cellulose fiber-containing composition was obtained in the same manner as that of Example 1, with the exception that the additive amount of water was 49.8 parts by mass and the additive amount of methanol was 49.8 parts by mass, with respect to 0.4 parts by mass of the ultrafine cellulose fibers.

### [Comparative Example 9]

An ultrafine cellulose fiber-containing composition was obtained in the same manner as that of Example 1, with the exception that the additive amount of water was 19.6 parts by mass and the additive amount of methanol was 80 parts by mass, with respect to 0.4 parts by mass of the ultrafine cellulose fibers.

### [Comparative Example 10]

An ultrafine cellulose fiber-containing composition was obtained in the same manner as that of Example 1, with the exception that the additive amount of water was 19.6 parts by mass and the additive amount of ethylene glycol was 80 parts by mass, with respect to 0.4 parts by mass of the ultrafine cellulose fibers.

### [Evaluation]

### < Method >

The ultrafine cellulose fiber-containing compositions produced in Examples and Comparative Examples were each evaluated according to the following evaluation methods.

### (1) Evaluation of dispersibility

The dispersed states of the ultrafine cellulose fiber-containing compositions produced in Examples and Comparative Examples were observed by visual inspection. The evaluation criteria are as follows.
○: No aggregates are generated in the ultrafine cellulose fiber-containing composition (even in a case where an organic solvent is present therein), and the ultrafine cellulose fibers remain uniform and the dispersed state is not changed.
×: Aggregates are generated in the ultrafine cellulose fiber-containing composition, and the dispersed state of the ultrafine cellulose fibers is changed.

### (2) Measurement of viscosity

The ultrafine cellulose fiber-containing compositions obtained in Examples and Comparative Examples were left at rest under the environment of 25°C for 16 hours or more, and were then rotated using a Type B Viscometer (No. 3 Rotor) (manufactured by BROOKFIELD, analog viscometer T-LVT) at 25°C at a rotation number of 3 rpm for 3 minutes. It is to be noted that the solid concentration of the composition to be used in the measurement of viscosity was set at 0.4% by mass.

### (3) Measurement of total light transmittance

The ultrafine cellulose fiber-containing compositions obtained in Examples and Comparative Examples were left at rest under the environment of 25°C for 16 hours or more, and the total light transmittance was then measured in accordance with JIS K 7361 using a haze meter (manufactured by MURAKAMI COLOR RESEARCH LABORATORY Co., Ltd., HM-150). The solid concentration of the cellulose fiber-containing composition was set at 0.2% by mass. Upon the measurement, the composition was placed in a glass cell for liquid having an optical path length of 1 cm (manufactured by Fujiwara Scientific Company Co., Ltd., MG-40, inverse optical path). It is to be noted that the measurement of zero point was carried out with ion exchange water filled in the same glass cell as that described above.

### (4) Measurement of haze

The ultrafine cellulose fiber-containing compositions obtained in Examples and Comparative Examples were left at rest under the environment of 25°C for 16 hours or more, and the haze was then measured in accordance with JIS K 7136 using a haze meter (manufactured by MURAKAMI COLOR RESEARCH LABORATORY Co., Ltd., HM-150). The solid concentration of the cellulose fiber-containing composition was set at 0.2% by mass. Upon the measurement, the composition was placed in a glass cell for liquid having an optical path length of 1 cm (manufactured by Fujiwara Scientific Company Co., Ltd., MG-40, inverse optical path). It is to be noted that the measurement of zero point was carried out with ion exchange water filled in the same glass cell as that described above.

### (5) Measurement of dielectric constant

The dielectric constant of each of the ultrafine cellulose fiber-containing compositions obtained in Examples and Comparative Examples was measured using a liquid dielectric constant meter (manufactured by Nihon Rufuto Co., Ltd., Model-871). It is to be noted that, before the measurement of the dielectric constant of the cellulose fiber-containing composition, the composition was lest at rest under the environment of 25°C for 16 hours or more, so that the liquid temperature of the composition became 25°C. Moreover, the measurement was carried out under the environment of 25°C.

**[Table 1]**

| | Fiber diameter [nm] | Solvent | Mixing ratio [part by mass] | | | Total light transmittance [%] | Haze [%] | Viscosity [mPa·s] | Dielectric constant | Dispersibility |
|---|---|---|---|---|---|---|---|---|---|---|
| | | | CNF | Water | Solvent | | | | | |
| Ex. 1 | 4-20 | Isopropyl alcohol | 0.4 | 80 | 19.6 | 99.0 | 4.8 | 28000 | 64.9 | ○ |
| Ex. 2 | 4-20 | Isopropyl alcohol | 0.4 | 70 | 29.6 | 98.6 | 6.8 | 17600 | 60.4 | ○ |
| Ex. 3 | 4-20 | Ethanol | 0.4 | 80 | 19.6 | 99.2 | 4.2 | 25000 | 65.0 | ○ |
| Ex. 4 | 4-20 | Ethanol | 0.4 | 70 | 29.6 | 98.7 | 6.1 | 21800 | 59.1 | ○ |
| Ex. 5 | 4-20 | Propylene glycol | 0.4 | 80 | 19.6 | 99.3 | 3.2 | 29000 | 68.7 | ○ |
| Ex. 6 | 4-20 | Propylene glycol | 0.4 | 70 | 29.6 | 99.3 | 3.8 | 30000 | 56.9 | ○ |
| Ex. 7 | 4-20 | Methanol | 0.4 | 80 | 19.6 | 99.3 | 3.9 | 24000 | 67.3 | ○ |
| Ex. 8 | 4-20 | Ethylene glycol | 0.4 | 80 | 19.6 | 99.3 | 3.4 | 28000 | 71.6 | ○ |
| Ex. 9 | 4-20 | Ethylene glycol | 0.4 | 49.8 | 49.8 | 99.3 | 4.3 | 28000 | 62.6 | ○ |
| Ex. 10 | 4-20 | Glycerin | 0.4 | 80 | 19.6 | 99.5 | 2.4 | 40000 | 72.9 | ○ |
| Ex. 11 | 4-20 | Glycerin | 0.4 | 49.8 | 49.8 | 99.6 | 2.4 | 64000 | 64.4 | ○ |
| Comp. Ex. 1 | 4-20 | Isopropyl alcohol | 0.4 | 60 | 39.6 | 99.0 | 6.8 | 1400 | 54.2 | × |
| Comp. Ex. 2 | 4-20 | Isopropyl alcohol | 0.4 | 49.8 | 49.8 | Unmeasurable | Unmeasurable | Unmeasurable | 47.8 | × |
| Comp. Ex. 3 | 4-20 | Isopropyl alcohol | 0.4 | 19.6 | 80 | Unmeasurable | Unmeasurable | Unmeasurable | 32.2 | × |
| Comp. Ex. 4 | 4-20 | Ethanol | 0.4 | 60 | 39.6 | 98.9 | 6.5 | 2200 | 53.2 | × |
| Comp. Ex. 5 | 4-20 | Ethanol | 0.4 | 49.8 | 49.8 | Unmeasurable | Unmeasurable | Unmeasurable | 46.9 | × |
| Comp. Ex. 6 | 4-20 | Ethanol | 0.4 | 19.6 | 80 | Unmeasurable | Unmeasurable | Unmeasurable | 32.4 | × |
| Comp. Ex. 7 | 4-20 | Propylene glycol | 0.4 | 19.6 | 80 | Unmeasurable | Unmeasurable | Unmeasurable | 40.2 | × |
| Comp. Ex. 8 | 4-20 | Methanol | 0.4 | 49.8 | 49.8 | Unmeasurable | Unmeasurable | Unmeasurable | 54.5 | × |
| Comp. Ex. 9 | 4-20 | Methanol | 0.4 | 19.6 | 80 | Unmeasurable | Unmeasurable | Unmeasurable | 41.8 | × |
| Comp. Ex. 10 | 4-20 | Ethylene glycol | 0.4 | 19.6 | 80 | 99.3 | 5.6 | 8600 | 50.8 | × |

As is clear from Table 1, in Examples 1 to 11, in which the dielectric constant of the ultrafine cellulose fiber-containing composition was 55 or more, no aggregates were generated even if the dispersion medium comprised a predetermined organic solvent, and the composition exhibited favorable dispersibility, maintaining good viscosity and haze values. In Comparative Examples 1 to 10, in which the dielectric constant of the ultrafine cellulose fiber-containing composition was less than 55, aggregates were generated because the dispersion medium comprised an organic solvent, and as a result, dispersion conditions were changed, such that, for example, a viscosity or haze value was decreased. Hence, it was suggested that the dispersibility of the ultrafine cellulose fiber-containing composition could be improved by appropriately controlling the dielectric constant of the ultrafine cellulose fiber-containing composition.

## Claims

1. A cellulose fiber-containing composition comprising cellulose fibers having a fiber width of 1000 nm or less, water, and alcohol, wherein
the alcohol is at least one type selected from monovalent primary alcohol, monovalent secondary alcohol, and polyhydric alcohol, and
the dielectric constant of the cellulose fiber-containing composition at 25°C is 55 or more and less than 80.

2. The cellulose fiber-containing composition according to claim 1, wherein the content of the alcohol is 10% by mass or more with respect to the total mass of the cellulose fiber-containing composition.

3. The cellulose fiber-containing composition according to claim 1 or 2, wherein when the cellulose fiber-containing composition is processed into a slurry having a solid concentration of 0.2% by mass and the slurry is then left at rest under the environment of 25°C for 16 hours or more, the haze of the slurry measured in accordance with JIS K 7136 is 20% or less.

4. The cellulose fiber-containing composition according to any one of claims 1 to 3, wherein when the cellulose fiber-containing composition is processed into a slurry having a solid concentration of 0.4% by mass and the slurry is then left at rest under the environment of 25°C for 16 hours or more, the viscosity of the slurry measured by rotating at 25°C at a rotation number of 3 rpm for 3 minutes, using a type B viscometer, is 10000 mPa·s or more.

5. The cellulose fiber-containing composition according to any one of claims 1 to 4, wherein when the cellulose fiber-containing composition is processed into a slurry having a solid concentration of 0.2% by mass and the slurry is then left at rest under the environment of 25°C for 16 hours or more, the total light transmittance of the slurry measured in accordance with JIS K 7361 is 98% or more.
